# EUROPEAN PATENT APPLICATION

(11) **EP 4 691 989 A1**
(43) Date of publication of application: **11.02.2026**
(21) Application number: 24780827.2
(22) Date of filing: 29.03.2024
(51) Int. Cl.: C01D 15/08, C22B 1/00, C22B 3/06, C22B 3/08, C22B 3/10, C22B 3/44, C22B 7/00, C22B 26/12, H01M 10/54

(54) **METHOD FOR PRODUCING LITHIUM CARBONATE AND APPARATUS FOR PRODUCING LITHIUM CARBONATE**

(30) Priority: 31.03.2023 JP 2023058132; 28.03.2024 JP 2024053899
(71) Applicant: Mitsubishi Materials Corporation, Chiyoda-ku Tokyo 100-8117 (JP)
(72) Inventor: SATO, Ryosuke, Iwaki-shi, Fukushima 971-8101 (JP); HAYASHI, Hiroshi, Tokyo 100-8117 (JP); MURAOKA, Hiroki, Iwaki-shi, Fukushima 971-8101 (JP)
(74) Representative: Gille Hrabal Partnerschaftsgesellschaft mbB Patentanwälte
(86) International application number: PCT/JP2024/013089
(87) International publication number: WO 2024/204732

(57) **Abstract**

The present method for producing lithium carbonate includes a carbon dioxide generation step of generating carbon dioxide by adding an inorganic acid to a raw material including a carbonate, a carbon dioxide recovery step of recovering the carbon dioxide, and a lithium carbonate generation step of adding the recovered carbon dioxide to a lithium-containing liquid to obtain lithium carbonate. The apparatus for producing lithium carbonate of the present invention has a reaction tank that generates carbon dioxide using a raw material including a carbonate, and an inorganic acid, a carbon dioxide recovery device that recovers the carbon dioxide, and a lithium carbonate generation tank that generates lithium carbonate by supplying the carbon dioxide from the carbon dioxide recovery device to a lithium-containing liquid.

## Description

### TECHNICAL FIELD

The present invention relates to a method for producing lithium carbonate and an apparatus for producing lithium carbonate.

Priority is claimed on Japanese Patent Application No. 2023-58132, filed on March 31, 2023, and Japanese Patent Application No. 2024-53899, filed on March 28, 2024, the contents of which are incorporated herein by reference.

### BACKGROUND ART

In recent years, in electric vehicles or lithium ion batteries used in the electric vehicles, it has been required to reduce the amount of greenhouse gases emitted throughout the entire life cycle from procurement of raw materials for products to disposal and recycling.

In a case of recovering resources such as lithium from a lithium-ion battery, it is common to use a recycled raw material referred to as a so-called black mass, which is lithium-ion battery-sintered powder obtained by sintering and crushing the lithium-ion battery.

As a method for recovering lithium from the black mass, for example, Patent Document 1 discloses a method in which black mass containing lithium aluminate is leached in an acidic solution to recover lithium, with a focus on lithium aluminate contained in the black mass.

Patent Document 2 discloses a method in which active material powder obtained by crushing a lithium-ion battery is burned, a carbon content in the active material powder is burned to convert a carbon content in the active material powder into carbon dioxide, and then the burned active material powder is wet-dissolved to recover lithium.

### Citation List

### Patent Documents

Patent Document 1: Japanese Patent No. 6998241
Patent Document 2: Japanese Unexamined Patent Application, First Publication No. 2022-168616

### SUMMARY OF INVENTION

### Technical Problem

In the lithium recovery method disclosed in Patent Document 1, it is disclosed that lithium is recovered and then lithium is carbonated to obtain lithium carbonate, but it is not considered to reduce greenhouse gases such as carbon dioxide in the process up to obtaining lithium carbonate.

Patent Document 2 discloses that carbon dioxide obtained by burning a carbon content in active material powder is introduced into a lithium-containing solution obtained by wet-dissolution to obtain lithium carbonate. That is, a method in which the amount of carbon dioxide emitted is reduced by employing carbon dioxide generated by burning a carbon content in active material powder as a carbon source for obtaining lithium carbonate has been studied.

However, the active material powder obtained by crushing the lithium-ion battery contains a large amount of impurities, and the gas component generated during the burning of the active material powder contains not only carbon dioxide but also hydrogen fluoride, nitrogen oxide, sulfur compound, and the like. Hydrogen fluoride, nitrogen oxides, and sulfur compounds in the gas components have problems in that they are easily incorporated as impurities and the purity of lithium carbonate is reduced.

The present invention has been made in consideration of the above-described circumstances, and an object of the present invention is to provide a method for producing lithium carbonate and an apparatus for producing lithium carbonate, with which high-quality lithium carbonate can be obtained while reducing the amount of carbon dioxide emitted and the usage cost.

### Solution to Problem

In order to solve the problems, the present invention provides any of the following aspects.
(1) A method for producing lithium carbonate, the method including:
   a carbon dioxide generation step of generating carbon dioxide by adding an inorganic acid to a raw material including a carbonate;
   a carbon dioxide recovery step of recovering the carbon dioxide; and
   a lithium carbonate generation step of adding the recovered carbon dioxide to a lithium-containing liquid to obtain lithium carbonate.
(2) The method for producing lithium carbonate according to (1),
   in which the carbon dioxide is recovered by absorbing gaseous carbon dioxide into an alkaline solution in the carbon dioxide recovery step.
(3) The method for producing lithium carbonate according to (1),
   in which the carbon dioxide is recovered by collecting gaseous carbon dioxide in the carbon dioxide recovery step.
(4) The method for producing lithium carbonate according to any one of (1) to (3),
   in which the raw material contains a lithium compound.
(5) The method for producing lithium carbonate according to any one of (1) to (3),
   in which the raw material is lithium-ion battery-sintered powder obtained by sintering and crushing a lithium-ion battery.
(6) The method for producing lithium carbonate according to any one of (1) to (5),
   in which the inorganic acid is one or more selected from the group consisting of sulfuric acid, hydrochloric acid, and nitric acid.
(7) The method for producing lithium carbonate according to any one of (1) to (5),
   in which a temperature condition is in a range of 10°C or higher and 40°C or lower, and a pH condition is pH 6 or less in the carbon dioxide generation step.
(8) An apparatus for producing lithium carbonate, the apparatus including:
   a reaction tank that generates carbon dioxide using a raw material including a carbonate, and an inorganic acid;
   a carbon dioxide recovery device that recovers the carbon dioxide; and
   a lithium carbonate generation tank that generates lithium carbonate by supplying the carbon dioxide from the carbon dioxide recovery device to a lithium-containing liquid.
(9) The apparatus for producing lithium carbonate according to (8),
   in which the carbon dioxide recovery device is a device that collects gaseous carbon dioxide.
(10) The apparatus for producing lithium carbonate according to (8),
   in which the carbon dioxide recovery device is a device that collects carbon dioxide by absorbing gaseous carbon dioxide into an alkaline solution. Advantageous Effects of Invention

According to the present invention, it is possible to provide a method for producing lithium carbonate and an apparatus for producing lithium carbonate, with which high-quality lithium carbonate can be obtained while reducing the amount of carbon dioxide emitted and the usage cost.

### BRIEF DESCRIPTION OF DRAWINGS

[FIG. 1] A flowchart showing a stepwise method for producing lithium carbonate of an embodiment of the present invention.
[FIG. 2] A schematic configuration view of an apparatus for producing lithium carbonate of an embodiment of the present invention.

### DESCRIPTION OF EMBODIMENTS

Hereinafter, the method for producing lithium carbonate and the apparatus for producing lithium carbonate of the embodiments of the present invention will be described with reference to the drawings. Furthermore, the embodiments shown below are specifically described for better understanding of the gist of the invention and do not limit the present invention unless otherwise specified.

### (Method for Producing Lithium Carbonate)

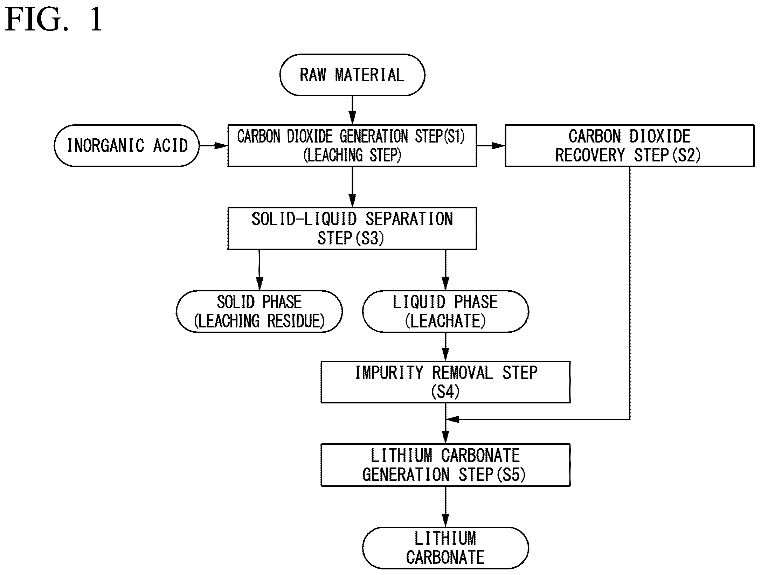

As shown in FIG. 1, the method for producing lithium carbonate of the present embodiment includes at least a carbon dioxide generation step S1 of generating carbon dioxide by adding an inorganic acid to a raw material including a carbonate, a carbon dioxide recovery step S2 of recovering the carbon dioxide, and a lithium carbonate generation step S5 of adding the recovered carbon dioxide to a lithium-containing liquid to obtain lithium carbonate.

In the method for producing lithium carbonate of the present embodiment, the carbon dioxide generation step S1 may be a leaching step of leaching lithium ions from a raw material including a carbonate. In this case, the method for producing lithium carbonate of the present embodiment may include a solid-liquid separation step S3 of separating a leachate and a leaching residue from each other generated in the carbon dioxide generation step S1, and an impurity removal step S5 of removing impurities from the leachate separated in the solid-liquid separation step S3.

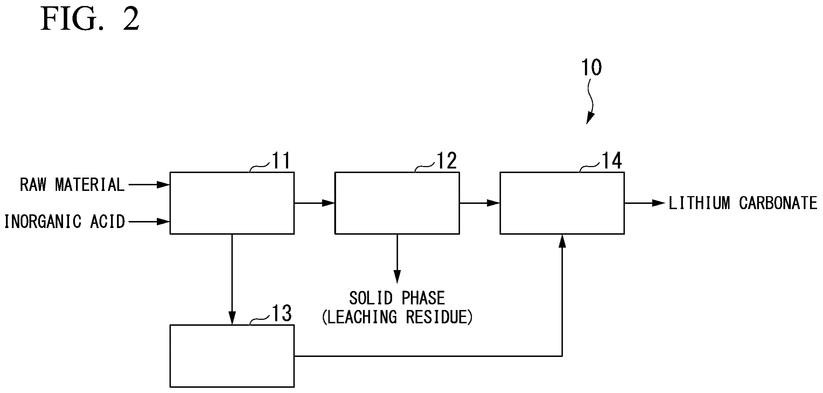

In the method for producing lithium carbonate of the present embodiment, the lithium carbonate is preferably produced by an apparatus 10 for producing lithium carbonate shown in FIG. 2. The apparatus 10 for producing lithium carbonate used in the present embodiment includes at least a reaction tank (leaching tank) 11, a carbon dioxide recovery device 13, and a lithium carbonate generation tank 14. Furthermore, the apparatus 10 for producing lithium carbonate of the present embodiment may have a solid-liquid separation tank 12.

### (Carbon Dioxide Generation Step: S1)

In the carbon dioxide generation step S1, an inorganic acid is added to a raw material including a carbonate to generate carbon dioxide.

In the present embodiment, the raw material may contain a lithium compound and the carbonate may be a lithium compound.

Examples of the carbonate include one or more selected from the group consisting of lithium carbonate, cobalt carbonate, nickel carbonate, aluminum carbonate, and calcium carbonate.

More specifically, examples of the raw material including a carbonate include lithium-ion battery-sintered powder (black mass) formed using a used lithium-ion battery recovered as a recycling raw material or lithium-ion battery-sintered powder (black mass) formed using scrap generated in a step for producing a lithium-ion battery.

The positive electrode active material of the lithium-ion battery includes a lithium compound such as lithium cobaltate (LiCoO₂), lithium nickelate (LiNiO₂), and lithium manganate (LiMn₂O₄). In addition, the negative electrode active material may include a lithium compound such as lithium titanate. Furthermore, the electrolytic liquid includes a lithium compound such as lithium hexafluorophosphate (LiPF₆) and lithium tetrafluoroborate (LiBF₄).

Among these lithium compounds, the lithium compound bonded to trivalent cobalt, nickel, or manganese (lithium cobaltate (LiCoO₂), lithium nickelate (LiNiO₂), lithium manganate (LiMn₂O₄), or the like) is poorly soluble in inorganic acids that become divalent ions, such as sulfuric acid.

Therefore, it is preferable that the lithium compound bonded to trivalent cobalt, nickel, or manganese is heated and thermally decomposed to convert lithium in the lithium compound with the trivalent cobalt, nickel, or manganese into a form of lithium carbonate. In the process of thermal decomposition, lithium in the lithium compound bonded to trivalent cobalt, nickel, or manganese reacts with carbon dioxide generated in the process of thermal decomposition to generate lithium carbonate (Li₂CO₃). In addition, the lithium compound derived from an electrolytic liquid also reacts with the carbon dioxide generated in the process of thermal decomposition to generate lithium carbonate (Li₂CO₃).

### First Method:

In a first method for obtaining lithium-ion battery-sintered powder (black mass) including lithium carbonate (Li₂CO₃), a used lithium-ion battery is discharged and then directly placed in a thermal decomposition furnace, and is preferably heated in a superheated water vapor atmosphere or a non-oxidizing atmosphere such as nitrogen, for example, for approximately 30 minutes or more and 5 hours or less in a temperature range of approximately 400°C or higher and 600°C or lower to thermally decompose the lithium-ion battery. In a case where the thermal decomposition of the lithium-ion battery is performed under the above-described conditions of the atmosphere, the temperature, and the time, the aluminum contained in the lithium-ion battery is embrittled without being melted, which is thus preferable.

In the thermal decomposition of the lithium-ion battery of the present embodiment, the exterior case of the lithium-ion battery is melted or embrittled to be separated and recovered, and the binder is decomposed, so that the positive electrode active material and the collector can be brought into a state in which they can be separated from each other. Furthermore, in the thermal decomposition of the lithium-ion battery of the present embodiment, the lithium compound bonded to trivalent cobalt, nickel, or manganese in the positive electrode active material is thermally decomposed to generate a thermal decomposition product. Then, the carbon dioxide generated in the process of thermal decomposition reacts with lithium in the thermal decomposition product to generate lithium carbonate (Li₂CO₃).

Next, the above-described thermal decomposition product of the lithium-ion battery is crushed. By the crushing, the electrode active material after the thermal decomposition is generally formed into a first fine crushed product having a particle diameter of less than 1 mm. For the crushing, for example, a crushing treatment can be performed using a shearing type crusher such as a biaxial shearing crusher, an impact type crusher such as a hammer mill alone, or a combination thereof.

Next, the crushed product of the thermal decomposition product of the lithium-ion battery is classified using a sieve having an appropriate mesh opening, and for example, fine particles having a size of less than 1 mm and preferably 0.5 mm or less and coarse particles larger than the fine particles are sieved. For the classification, sieving may be formed using, for example, a vibrating sieve having a mesh opening of 0.1 mm or more and 1.0 mm or less, and preferably a mesh opening of approximately 0.1 mm or more and 0.5 mm or less. Through such the classification, it is possible to classify metal lumps of the exterior case included in the coarse particles or a metal foil derived from the collector, and thermal decomposition products of the electrode active materials included in the fine particles.

Through the above-described steps, it is possible to obtain the lithium-ion battery-sintered powder (black mass) including lithium carbonate of the present embodiment and having a particle size of 1 mm or less. Furthermore, the proportion of lithium carbonate included in the black mass is, for example, approximately 1% by mass or more and 10% by mass or less, and is suitable for the generation of carbon dioxide.

### Second Method:

In a second method for obtaining lithium-ion battery-sintered powder (black mass) including lithium carbonate (Li₂CO₃), first, a used lithium-ion battery is immersed in a saline solution to remove the internal charge of the lithium-ion battery. Subsequently, the lithium-ion battery from which the internal charge has been removed is dried and then crushed to obtain a second crushed product having a size that allows the positive electrode active material inside the lithium-ion battery and the exterior case to be separated from each other with high accuracy. The crushing can be performed by, for example, a uniaxial crusher.

The concentration of the saline solution for removing the internal charge of the lithium-ion battery is not particularly limited.

In addition, the mesh opening size of the screen of the uniaxial crusher is preferably 6 mm or more and 10 mm or less in diameter. In a case where the mesh opening size of the screen is within this range, the positive electrode active material inside the lithium-ion battery and the exterior case can be sufficiently separated from each other.

Next, the second crushed product is classified using a sieve having an appropriate mesh opening size to recover the positive electrode active material from the second crushed product. For example, the positive electrode active material inside the lithium-ion battery in the second crushed product and the exterior case can be classified by sieving using a vibrating sieve having a mesh opening size of 0.25 mm or more and 2.8 mm or less.

Examples of a method for separating the used lithium-ion battery to a positive electrode active material inside the lithium-ion battery and the exterior case include a method using an immersion crushing device, in which a crushing device is immersed in an immersion liquid. Specifically, the used lithium-ion battery is crushed using the immersion crushing device, a light crushed product such as an exterior case (plastic part) of the crushed lithium-ion battery is floated, a metal including a positive electrode active material is precipitated, and the precipitate is recovered, thereby recovering the positive electrode active material.

The immersion liquid is an aqueous solution including at least one selected from the group consisting of sodium hydroxide, calcium hydroxide, and lithium hydroxide, and preferably has a pH of 8 or more. In a case where the immersion liquid includes at least one salt selected from sodium hydroxide, calcium hydroxide, and lithium hydroxide, the residual charge in the lithium-ion battery can be released in the immersion liquid.

As described above, the positive electrode active material recovered using an uniaxial crusher or an immersion crushing device is placed in a thermal decomposition furnace, and preferably heated in a non-oxidizing atmosphere such as superheated water vapor atmosphere and nitrogen in a temperature range of, for example, approximately 400°C or higher and 600°C or lower for approximately 1 hour or more and 2 hours or less, and the lithium in the lithium compound bonded to trivalent cobalt, nickel, or manganese is reacted with carbon dioxide generated in the process of thermal decomposition to generate lithium carbonate (Li₂CO₃).

In a case where the thermal decomposition of the positive electrode active material is performed under the above-described conditions of the atmosphere, temperature, and time, the metal such as aluminum contained in the positive electrode active material is embrittled without being melted, which is thus preferable.

The thermal decomposition product including lithium carbonate (Li₂CO₃) can be classified using a sieve having an appropriate mesh opening in the same manner as in the first method to obtain lithium-ion battery-sintered powder (black mass) including the lithium carbonate of the present embodiment and having a particle size of 1 mm or less.

The second method for obtaining black mass including lithium carbonate (Li₂CO₃) is preferable since the amount of exhaust gas can be further reduced.

### Third Method:

In a third method for obtaining lithium-ion battery-sintered powder (black mass) including lithium carbonate (Li₂CO₃), black mass is obtained from scrap generated in the step for producing the lithium-ion battery, for example, cuttings of a sheet-like positive electrode material, or black powder which is a defective product of the lithium-ion battery.

For example, black mass can be obtained by thermally decomposing, crushing, and classifying scrap generated in the step for producing the lithium-ion battery by the same method as the first method. Alternatively, black mass can be obtained by crushing a scrap generated in a step for producing a lithium-ion battery using a uniaxial crusher or an immersion crushing device in the same manner as in the second method, recovering a positive electrode active material from the crushed product, and thermally decomposing and classifying the positive electrode active material.

In the carbon dioxide generation step S1 of the present embodiment, for example, lithium-ion battery-sintered powder (black mass) including lithium carbonate obtained by any one of the above-described first to third methods as the carbonate is used as the raw materials.

In the present embodiment, the above-described black mass is put into a resin-made reaction tank (leaching tank) 11, water and an inorganic acid are further put into the reaction tank 11, and then the reaction tank 11 is stirred and agitated. Furthermore, in order to improve the reaction efficiency in the reaction tank 11, the black mass may be subjected to fine crushing or abrasion crushing.

It is preferable that as the inorganic acid, one or more selected from the group consisting of sulfuric acid, hydrochloric acid, and nitric acid are used.

In the reaction tank 11, it is preferable that the black mass, water, and the inorganic acid, which are the raw materials, are mixed to have a pH at which lithium carbonate is dissolved. The pH at which lithium carbonate is dissolved is, for example, preferably approximately pH 6 or less, and more preferably in a range of pH 2 or more and pH 5 or less. At a pH of 6 or less, lithium carbonate is dissolved to generate carbon dioxide. On the other hand, at a pH of less than 2, the solubility of lithium carbonate does not change and the amount of carbon dioxide generated also does not change.

In a case where lithium carbonate is dissolved, one or more reactions selected from decomposition reactions shown in Formulae (1) to (3) proceed to generate carbon dioxide (carbon dioxide generation step S1).

Li₂CO₃ + H₂SO₄ → Li₂SO₄ (liquid phase) + H₂O (liquid phase) + CO₂ (gas) (1)

Li₂CO₃ + 2HCl → 2LiCl (liquid phase) + H₂O (liquid phase) + CO₂ (gas) (2)

Li₂CO₃ + 2HNO₃ → 2LiNO₃ (liquid phase) + H₂O (liquid phase) + CO₂ (gas) (3)

The carbon dioxide generation step is preferably performed at approximately normal temperature (preferably 10°C or higher and 40°C or lower, and more preferably 18°C or higher and 25°C or lower).

In a method in the related art, in which a carbon content in the active material powder in the lithium-ion battery is burned to generate carbon dioxide, the reaction temperature is high, and hydrogen fluoride, nitrogen oxides (NOx), and sulfur compounds are simultaneously generated. Therefore, in a case where the gas components obtained by the method in the related art are used in the lithium carbonate generation step at the subsequent stage, there is a problem in that the quality of lithium carbonate is deteriorated.

Since the gas generated in the carbon dioxide generation step S1 of the present embodiment is a non-combustion gas as described above, the gas does not contain hydrogen fluoride, a nitrogen oxide (NOx), and a sulfur compound.

In a case where the gas generated in a case where the black mass, water, and an inorganic acid are mixed to generate carbon dioxide is within the range of the temperature condition of the carbon dioxide generation step S1 of the present embodiment, the generated gas therefore contains carbon dioxide, hydrogen, oxygen, and the like.

On the other hand, in a case where the temperature is lower than normal temperature, there occurs a problem that carbon dioxide is less likely to be generated.

The component composition of the gas generated in the carbon dioxide generation step S1 of the present embodiment is, for example, as follows: carbon dioxide: 95% by volume or more and 98% by volume or less, hydrogen: 1% by volume or more and 2% by volume or less, and the balance: oxygen and the like.

The components of the gas can be measured by gas chromatography.

The reaction time in the reaction tank 11 may be, for example, in a range of 30 minutes or more and 20 hours or less. In a case where the reaction time is less than 30 minutes, there is a concern that the lithium carbonate included in the black mass may not sufficiently react with the inorganic acid. In addition, even in a case where the reaction time is set to more than 20 hours, there is a concern that the reaction does not proceed any further and the treatment efficiency decreases.

As described above, the components contained in the gas obtained in the carbon dioxide generation step S1 of the present embodiment are carbon dioxide, oxygen, hydrogen, and the like. In the lithium carbonate generation step S5, oxygen and hydrogen do not cause impurities to be generated. Therefore, in a case where the carbon dioxide obtained in the carbon dioxide generation step S1 of the present embodiment is used as a carbon dioxide source in the lithium carbonate generation step S5 at the subsequent stage, high-quality lithium carbonate can be obtained without removing impurities in the gas.

In the carbon dioxide generation step S1 of the present embodiment, the leaching of the lithium compound into the liquid phase proceeds at the same time.

For example, the lithium carbonate included in the black mass reacts with an inorganic acid and moves to a leachate (liquid phase) in the form of lithium sulfate, lithium chloride, lithium nitrate, or the like. Subsequently, a calcium compound is added to the solution to neutralize the solution for separation of cobalt and nickel. Since the calcium compound added by neutralization is eluted and the black mass contains lithium fluoride in addition to lithium carbonate, the leachate contains impurities such as calcium and fluorine.

On the other hand, the leaching residue (solid phase) obtained after the leaching includes carbon, cobalt, nickel, and the like included in the black mass.

### (Carbon Dioxide Recovery Step: S2)

Next, in the carbon dioxide recovery step S2, the carbon dioxide generated in the carbon dioxide generation step S1 is recovered.

As the carbon dioxide recovery device 13 that recovers carbon dioxide, any of a gas collection device that recovers carbon dioxide by collecting the carbon dioxide in a gaseous state as it is, and an alkali solution tank that absorbs and thus recovers gaseous carbon dioxide with an alkali solution can be used.

In a case where the gas collection device 13 is used to recover gaseous carbon dioxide, the carbon dioxide can be used as it is in the lithium carbonate production step S5 at the subsequent stage. Therefore, the carbon dioxide is supplied from the gas collection device to the lithium carbonate generation tank 14 through a gas supply pipe (not shown).

In a case where carbon dioxide is recovered using an alkali solution tank, an aqueous sodium hydroxide solution is used as the alkali solution and carbon dioxide (gas) is introduced into the aqueous sodium hydroxide solution to recover the carbon dioxide. The concentration of the aqueous sodium hydroxide solution, which is preferable for recovering the carbon dioxide, is 1 mol/L or more and 18 mol/L or less.

In a case where carbon dioxide is introduced into an aqueous sodium hydroxide solution, the carbon dioxide is recovered as sodium hydrogen carbonate as shown in Formulae (4) and (5).

CO₂ +2NaOH → Na₂CO₃ +H₂O (4)

Na₂CO₃ + CO₂ + H₂O → 2NaHCO₃ (5)

### (Solid-Liquid Separation Step: S3)

In the solid-liquid separation step S3 of the present embodiment, the leachate (liquid phase) and the leaching residue (solid phase) obtained in the carbon dioxide generation step S1 are separated.

The solid-liquid separation may be performed, for example, by filtering the solid-liquid mixture obtained in the carbon dioxide generation step S1 using a filtration device to separate the solid phase and the liquid phase from each other by filtration. By the solid-liquid separation step S3, a solid phase consisting of carbon, cobalt, nickel, and the like included in the black mass and a leachate (liquid phase) in which lithium carbonate is dissolved in any of lithium sulfate, lithium chloride, and lithium nitrate can be obtained.

The solid phase obtained in the solid-liquid separation step S3 can be the leached with sulfuric acid or the like to leach and recover each metal from insoluble substances such as carbon (graphite) included in the solid phase.

### (Impurity Removal Step: S4)

In the impurity removal step S4 of the present embodiment, impurities are removed from the leachate (liquid phase) separated in the solid-liquid separation step S3.

In the present embodiment, the lithium-ion battery-sintered powder (black mass) is leached with one or more inorganic acids selected from the group consisting of sulfuric acid, hydrochloric acid, and nitric acid, and impurities such as calcium ions and fluoride ions coexist in the leachate.

In a case where the calcium ions coexist in the leachate, in the lithium carbonate generation step S5 at the subsequent stage, calcium carbonate is generated by the reaction with carbon dioxide and the purity of lithium carbonate is reduced. In addition, in a case where the fluoride ions coexist in the leachate, lithium fluoride is generated in the lithium carbonate generation step S5 at the subsequent stage and the purity of lithium carbonate is reduced.

Therefore, in the present embodiment, it is desirable to remove impurities such as the calcium ions and the fluoride ions from the leachate (liquid phase) separated in the solid-liquid separation step S3.

In the impurity removal step S4, it is preferable to first remove the fluoride ions from the leachate.

Examples of the method for removing the fluoride ions include a calcium fluoride method in which a calcium salt is added to a leachate to precipitate calcium fluoride (CaF₂) and the fluoride ions are separated as a solid content; an adsorption method in which the fluoride ions are adsorbed to aluminum hydroxide; or the both.

In the calcium fluoride method, as the calcium salt, one or more selected from calcium chloride, calcium carbonate, calcium hydroxide, and calcium sulfate can be used. Calcium fluoride (CaF₂) is deposited and precipitated by adding any of the calcium salts to a leachate containing fluoride ions. By such a reaction, the concentration of the fluoride ions in the leachate can be reduced.

In the adsorption method, the fluoride ions are removed from the leachate by adsorbing the fluoride ions to the surface of the aluminum hydroxide in the leachate containing the fluoride ions, and the aluminum hydroxide precipitate on which the fluoride ions are adsorbed is separated to reduce the concentration of fluoride ions in the leachate.

In the adsorption method, aluminum sulfate or aluminum chloride may be added to a leachate containing fluoride ions. The leachate of the present embodiment contains lithium ions, and in a case where aluminum sulfate or aluminum chloride is added, aluminum hydroxide is deposited and precipitated. In this case, the pH of the leachate is preferably in a range of pH 6 or more and pH 8 or less. In a case where the pH is in a range of pH 6 or more and pH 8 or less, the fluoride ions can be adsorbed to the aluminum hydroxide while reducing the solubility of the deposited aluminum hydroxide, and the purity of lithium carbonate obtained in the lithium carbonate generation step S5 at the subsequent stage can be increased.

In a case where the pH in the leachate is outside the range of pH 6 or more and pH 8 or less, aluminum ions remain in the leachate, which has an unpreferable effect on the lithium carbonate generation step S5 at the subsequent stage.

In the impurity removal step S4 of the present embodiment, sodium carbonate (Na₂CO₃) may be further added to the leachate from which the fluoride ions have been removed. In a case where sodium carbonate is added to the leachate, calcium ions in the leachate react with sodium carbonate, calcium carbonate (CaCO₃) is precipitated, and calcium ions can be separated as solid contents. By such separation of calcium ions, the concentration of calcium ions in the leachate can be reduced and the purity of lithium carbonate obtained in the lithium carbonate generation step S5 at the subsequent stage can be increased.

Furthermore, in a case where the leachate separated in the solid-liquid separation step S3 contains heavy metal ions (Fe³⁺, Mn²⁺, Ni²⁺, Co²⁺, and the like), the concentration of the heavy metal ions in the leachate can be reduced by depositing or adsorbing the heavy metal ions by any of the above-described calcium fluoride method, adsorption method, or generation of calcium carbonate.

### (Lithium Carbonate Generation Step: S5)

In the lithium carbonate generation step S5 of the present embodiment, lithium carbonate can be obtained by introducing the carbon dioxide recovered in the carbon dioxide recovery step S2 into the leachate from which impurities have been removed in the impurity removal step S4, depositing lithium carbonate, and separating the lithium carbonate precipitate.

That is, the leachate is used as a lithium-containing liquid.

In the lithium carbonate generation step S5 of the present embodiment, the carbon dioxide recovered in the carbon dioxide recovery step S2 is used as a carbon dioxide source. The carbon dioxide recovered in the carbon dioxide recovery step S2 is carbon dioxide included in the gas generated in the carbon dioxide generation step S1 in the previous stage. The gas generated in the carbon dioxide generation step S1 of the present embodiment contains oxygen, hydrogen, and the like in addition to carbon dioxide. However, the gas does not include components such as hydrogen fluoride, nitrogen oxides (NOx), and sulfur compounds.

Therefore, in the lithium carbonate generation step S5 of the present embodiment, impurities are not generated and high-quality lithium carbonate can be obtained.

In addition, in the lithium carbonate generation step S5 of the present embodiment, since the carbon dioxide generated in a case of leaching the lithium compound contained in the black mass into a liquid phase using an inorganic acid is used as a carbon dioxide source, the amount of carbon dioxide emitted into the atmosphere in a case of recycling the lithium-ion battery can be reduced and the cost of carbon dioxide in a case of producing lithium carbonate can be reduced.

In the lithium carbonate generation step S5 of the present embodiment, it is preferable that the gaseous carbon dioxide recovered in the carbon dioxide recovery step S2 using the gas collection device is directly introduced into the leachate in which any of lithium sulfate, lithium chloride, and lithium nitrate is dissolved, through the gas supply pipe.

In a case where lithium carbonate is deposited using gaseous carbon dioxide, components that affect the reaction of depositing lithium carbonate are not introduced into the leachate, and thus lithium carbonate having higher quality can be produced.

In the lithium carbonate generation step S5, the carbon dioxide recovered by the aqueous sodium hydroxide solution in the carbon dioxide recovery step S2 may be used as a carbon dioxide source.

In this case, carbon dioxide recovered with the aqueous sodium hydroxide solution obtained in the carbon dioxide recovery step S2 may be added to the leachate in which any of lithium sulfate, lithium chloride, and lithium nitrate is dissolved.

In this method, since carbon dioxide can be recovered and stored in an aqueous sodium hydroxide solution (alkali solution tank), it is possible to prevent the carbon dioxide from being emitted as a gas. In addition, in this method, the reaction to generate lithium carbonate proceeds more quickly than in the method to introduce gaseous carbon dioxide. Therefore, the cost of carbon dioxide in the generation of lithium carbonate can be more effectively reduced.

In the lithium carbonate generation step S5 of the present embodiment, only the gaseous carbon dioxide recovered using a gas collection device may be used as the carbon dioxide source, only the carbon dioxide recovered using an aqueous sodium hydroxide solution may be used, or both thereof may be used.

In the above-described embodiment, as the raw material including a carbonate, lithium-ion battery-sintered powder (black mass) formed using a lithium-ion battery recovered as a recycling raw material is used, but other incineration residues, dust, sludge, and the like may be used.

In addition, in the above-described embodiment, a leachate obtained by leaching black mass with an inorganic acid is used as the lithium-containing liquid for obtaining lithium carbonate, but a lithium-containing liquid generated in a case of acid-leaching a cathode material or an electrolyte may also be used.

### (Apparatus for Producing Lithium Carbonate)

As shown in FIG. 2, the apparatus 10 for producing lithium carbonate of the present embodiment has at least the reaction tank (leaching tank) 11, the carbon dioxide recovery device 13, and the lithium carbonate generation tank 14. The apparatus 10 for producing lithium carbonate of the present embodiment may further have a solid-liquid separation tank 12.

The reaction tank (leaching tank) 11 of the present embodiment may be any reaction tank as long as it can generate carbon dioxide from a raw material including a carbonate, using one or more inorganic acids selected from the group consisting of sulfuric acid, hydrochloric acid, and nitric acid. The carbon dioxide recovery device 13 may be any one or both of a gas collection device and an alkali solution tank. The solid-liquid separation tank 12 may be a separation device that performs solid-liquid separation of a solid-liquid mixture generated in the reaction tank (leaching tank) 11, for example, a filtration device. The lithium carbonate generation tank 14 may be any reaction tank that has a carbon dioxide supply unit for supplying carbon dioxide recovered by the carbon dioxide recovery device 13 and a leachate supply unit for supplying a leachate in which any of lithium sulfate, lithium chloride, and lithium nitrate separated in the solid-liquid separation tank 12 is dissolved, and can generate lithium carbonate.

### INDUSTRIAL APPLICABILITY

According to the method for producing lithium carbonate and the apparatus for producing lithium of the present invention, high-quality lithium carbonate can be obtained while reducing the amount of carbon dioxide emitted and the usage cost, and it is possible to contribute to a reduction in greenhouse gases.

### REFERENCE SIGNS LIST

- 10: Apparatus for producing lithium carbonate
- 11: Reaction tank (leaching tank)
- 12: Solid-liquid separation tank
- 13: Carbon dioxide recovery device
- 14: Lithium carbonate generation tank

## Claims

1. A method for producing lithium carbonate, the method comprising:
a carbon dioxide generation step of generating carbon dioxide by adding an inorganic acid to a raw material including a carbonate;
a carbon dioxide recovery step of recovering the carbon dioxide; and
a lithium carbonate generation step of adding the recovered carbon dioxide to a lithium-containing liquid to obtain lithium carbonate.

2. The method for producing lithium carbonate according to Claim 1,
wherein the carbon dioxide is recovered by absorbing gaseous carbon dioxide into an alkaline solution in the carbon dioxide recovery step.

3. The method for producing lithium carbonate according to Claim 1,
wherein the carbon dioxide is recovered by collecting gaseous carbon dioxide in the carbon dioxide recovery step.

4. The method for producing lithium carbonate according to Claim 1,
wherein the raw material contains a lithium compound.

5. The method for producing lithium carbonate according to Claim 1,
wherein the raw material is lithium-ion battery-sintered powder obtained by sintering and crushing a lithium-ion battery.

6. The method for producing lithium carbonate according to Claim 1,
wherein the inorganic acid is one or more selected from the group consisting of sulfuric acid, hydrochloric acid, and nitric acid.

7. The method for producing lithium carbonate according to Claim 1,
wherein a temperature condition is in a range of 10°C or higher and 40°C or lower, and a pH condition is pH 6 or less in the carbon dioxide generation step.

8. An apparatus for producing lithium carbonate, the apparatus comprising:
a reaction tank configured to generate carbon dioxide using a raw material including a carbonate, and an inorganic acid;
a carbon dioxide recovery device configured to recover the carbon dioxide; and
a lithium carbonate generation tank configured to generate lithium carbonate by supplying the carbon dioxide from the carbon dioxide recovery device to a lithium-containing liquid.

9. The apparatus for producing lithium carbonate according to Claim 8,
wherein the carbon dioxide recovery device is a device that collects gaseous carbon dioxide.

10. The apparatus for producing lithium carbonate according to Claim 8,
wherein the carbon dioxide recovery device is a device that collects carbon dioxide by absorbing gaseous carbon dioxide into an alkaline solution.
